# EUROPEAN PATENT SPECIFICATION

(11) **EP 1 205 687 B1**
(45) Date of publication and mention of the grant of the patent: **09.07.2003**
(21) Application number: 00124567.9
(22) Date of filing: 09.11.2000
(51) Int. Cl.: F16H 25/20, A47C 20/04

(54) **Adjustment drive**
Motorischer Antrieb
Dispositif de réglage

(43) Date of publication of application: 15.05.2002
(73) Proprietor: CIAR S.P.A., 61020 Pesaro (IT)
(72) Inventor: Marcantoni, Egidio, 6110 Pesaro (PU) (IT)
(74) Representative: Tetzner, Michael, Dipl.-Ing.

(56) References cited:
- EP-A- 0 798 473
- DE-U- 29 500 084
- US-A- 5 125 280
- US-A- 5 927 144

## Description

The invention relates to a drive for the adjustment of elements, particularly for the adjustment of seats and beds.

A drive for the adjustment of parts of seats and beds is known from WO 96/12123 and consists of a stationary spindle which is rotatable by way of a motor, a housing which surrounds the spindle and a nut which is disposed on the spindle inside the housing and is adjustable in the longitudinal direction of the spindle by the rotary movement of the spindle. First fixing means which are stationary relative to the housing and second fixing means which are coupled to the nut are also provided, the spacing between the two fixing means being variable by the rotary movement of the spindle for the adjustment of the seat or bed.

The housing surrounding the spindle is formed by a two-part guide profile. Furthermore the second fixing means are constructed as a sliding part which surrounds the guide profiles on the outside thereof so as to lock positively and moreover is connected integrally to the nut by way of two slots in the guide profile.

Furthermore, one of the two guide profiles has a channel extending parallel to the spindle in order to receive limit switches which can be actuated by the nuts. During the installation of the drive these limit switches are disposed at predetermined positions within the channel and thereby delimit the adjustment path of the nuts. Seats and beds equipped in this way usually have push-button switches with which the piece of furniture can be adjusted gradually between the two end positions predetermined by the switches. The adjustment usually takes place during the use as authorised in order to be able to undertake the precise setting which is required.

DE-U-295 00 084 discloses a drive for the adjustment of elements wherein limit switches are accommodated in a separate channel. The position of the limit switches are fixed by openings in which the limit switches are installed in order to be actuated by the nut.

EP-A-0 798 473 in accordance with the features of the preamble of claim 1 discloses a linear actuator provided with limit microswitches having a very simple adjustment, comprising a casing which accommodates an element movable on command along an actuation direction, a guide being connected to the casing and supporting two microswitches which are spaced from each other along the actuation direction of the moving element and can be actuated by the moving element when two preset positions are reached during its movement along the actuation direction. The guide is provided in at least two parts which are slidingly coupled to each other along a direction which is substantially parallel to the sliding direction. The two microswitches are connected respectively to one of the two guide parts and to the other one of the guide parts so as to allow to adjust the distance between the two microswitches through the sliding of one of the two guide parts with respect to the other without having to disassemble the actuator in any way.

The object of the invention is to make further improvements to the setting possibilities.

This object is achieved according to the invention by the features of Claim 1.

The drive according to the invention for the adjustment of elements, particularly for the adjustment of seats and beds, consists essentially of a stationary spindle which is rotatable by way of a motor, a housing which surrounds the spindle, a nut which is disposed on the spindle inside the housing and is adjustable in the longitudinal direction of the spindle by the rotary movement of the spindle, first fixing means which are stationary relative to the housing and second fixing means which are coupled to the nut are also provided, the spacing between the two fixing means being variable by the rotary movement of the spindle for the adjustment of the seat or bed. Limit switches are also provided which are disposed in the region of the housing and co-operate with the nuts, the limit switches having means for their adjustment in the longitudinal direction of the spindle and these means being capable of being actuated from outside the housing.

The ability to set the limit switches in various positions makes it possible for the user to be able to adapt the maximum adjustability of his element, for example his piece of furniture, to his requirements. The use of this adjustment facility takes effect in particular when the piece of furniture, for example a bed, is utilised only in two positions of use.

In a preferred embodiment the means for adjustment of the limit switches have locking means, for example a locking stop screw, in order to fix the limit switch in a desired position.

In a further embodiment of the invention the housing surrounding the spindle and at least a part of the channel in which the limit switches are accommodated are constructed in one piece.

Further embodiments of the invention are the subject matter of the subordinate claims.

An embodiment of the invention is explained in greater detail with the aid of the following description and the drawings, in which:
Figure 1 shows a longitudinal sectional view in the region of the drive,
Figure 2 shows a cross-sectional view of the drive,
Figure 3 shows a three-dimensional view of the housing with the limit switches and
Figure 4 shows an exploded view of a limit switch and of its adjustment means.

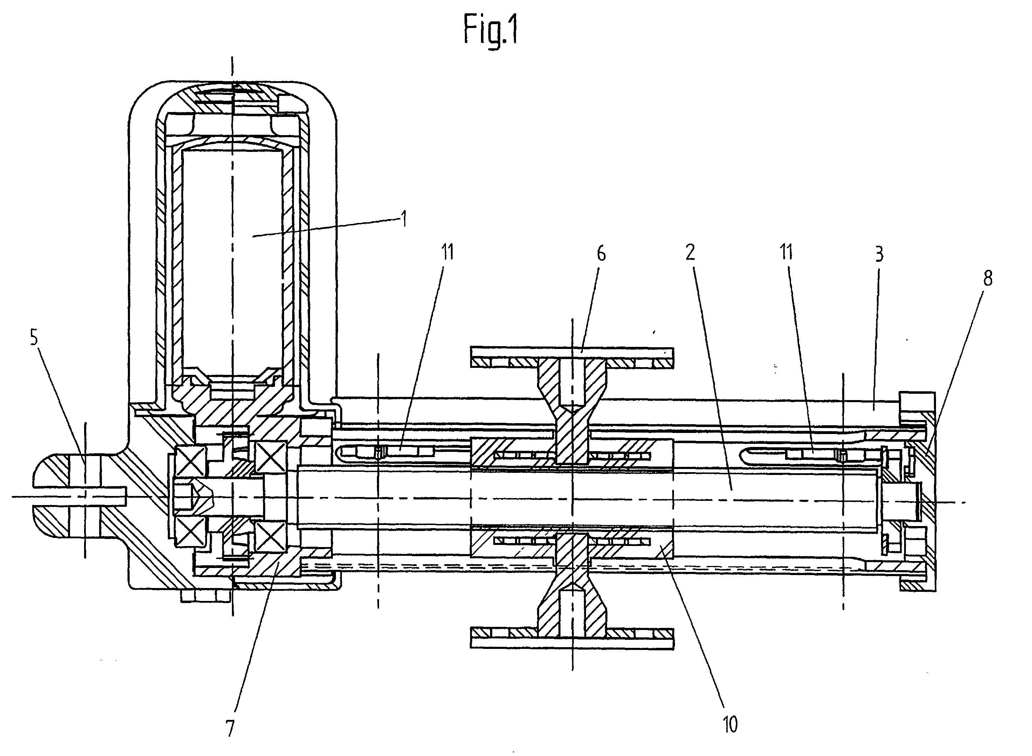

The drive shown in Figure 1 for the adjustment of elements, particularly for the adjustment of seats and beds, consists essentially of a stationary spindle 2 which is rotatable by way of a motor 1, a housing 3 which surrounds the spindle and a nut 4 which is disposed on the spindle inside the housing and is adjustable in the longitudinal direction of the spindle by the rotary movement of the spindle.

First fixing means 5 which are stationary relative to the housing 4 and second fixing means 6 which are coupled to the nut are also provided.

This drive can be fixed on a seat or bed for example by way of the first and second fixing means 5, 6. By a rotary movement of the spindle 2 the nut 4 is adjusted and with it also the second fixing means 6 which are fixed thereon, so that the spacing between the two fixing means 5, 6 is variable for adjustment of the seat or bed.

The housing 3 is firmly connected at one end to a base housing 7. The mounting for one end of the spindle as well as a gear unit for driving the spindle is accommodated in this base housing 7 and optionally also in the end region of the housing 3. The motor 1, which is operatively connected to the gear unit, is attached laterally in the region of the base housing 7 or of the end of the housing 3 which is fixed there. At the other end of the housing 3 the spindle 2 is retained in a suitable bearing 8.

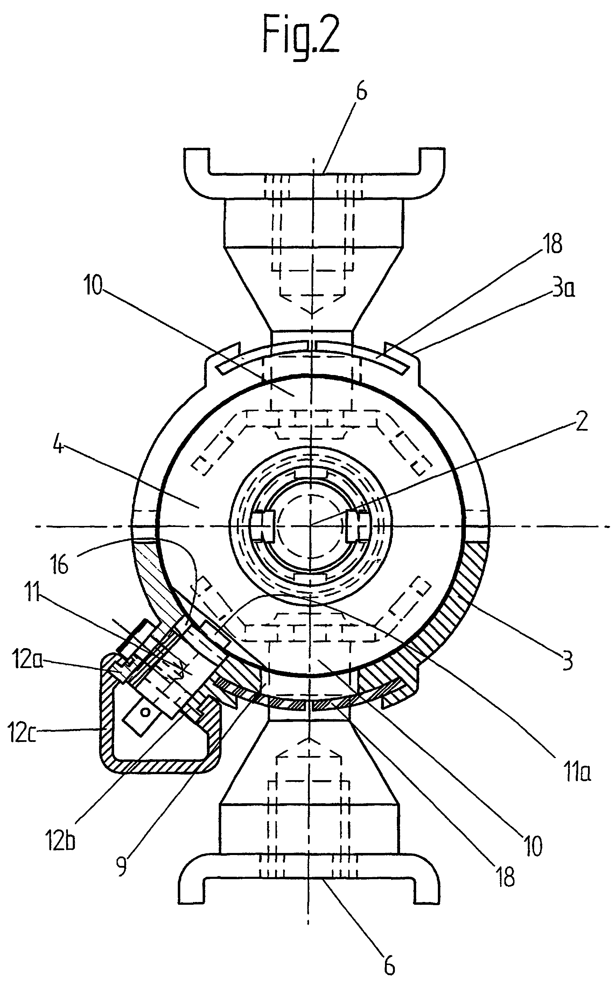

As can be seen particularly from Figures 1 and 2, the housing 3 has two slots 9 which extend in the longitudinal direction of the spindle 2 and lie opposite one another, and two lug-like connecting elements 10 protrude through these two slots, the connecting means 10 being connected at one end to the nut 4 and at the other end to the second fixing means 6. In this case the fixing means 6, the connecting means 9 and the nut 4 can be manufactured as required from one or more materials. Thus solutions are conceivable which are made in one piece or in a plurality of pieces. Preferably the connecting means and the first fixing means 6 are produced on each side as an integral part made from metal and are connected during the production of the nut using the injection moulding process to form a unit consisting of first fixing means 6, connecting means 10 and nut 4.

In the illustrated embodiment the housing 3 is of tubular construction. However, other cross-sectional shapes, particularly square cross-sectional shapes, are also conceivable. In the case of a tubular construction of the housing 3 the nut will advantageously be produced in a cylindrical shape, as can be seen from Figures 1 and 2. Otherwise the housing can be produced in a plurality of parts, particularly in two parts but also in one part. The one-part tubular construction of the housing with a correspondingly cylindrical nut can be produced particularly easily and is also very compact. In order to protect the spindle from dust and dirt and also to protect the user from unwanted contact with the spindle which is usually lubricated, flexible dust covers 18 which are made for example from a rubber-like material are also provided in the region of the slots. For this purpose grooves formed by flange-like projections 3a are provided in the region of the slots, as can be seen in particular from Figure 2. A flexible dust cover is laid at least over the entire length of the slot in each of the grooves formed by these flange-like projections 3a, so that both dust covers touch in the middle or only leave a very small gap free. These dust covers are so flexible that during a movement of the nut they can be opened without problems by the connecting means 10. Then, however, the gap 9 is almost completely closed by a corresponding flexible construction. Only in the region of the connecting means 10 are the two dust covers 18 raised somewhat and opened somewhat in front of and behind the connecting means 10.

Limit switches 11 which co-operate with the nut are also provided in the region of the housing. In the illustrated embodiment these limit switches are accommodated in a separate channel 12 on the outside of the housing 3. This channel extends parallel to the spindle and is substantially delimited by two walls 12a, 1b which project like wings from the housing, a part of the outside of the housing 3 extending between these two walls and also a cover 12c. The two side walls 12a, 12b are constructed integrally with the housing 3.

The two limit switches 11 are accommodated at the two end regions of the channel 12, means being provided for their adjustment in the longitudinal direction of the spindle 2 or of the channel 12. Moreover, these means can be actuated from outside the housing.

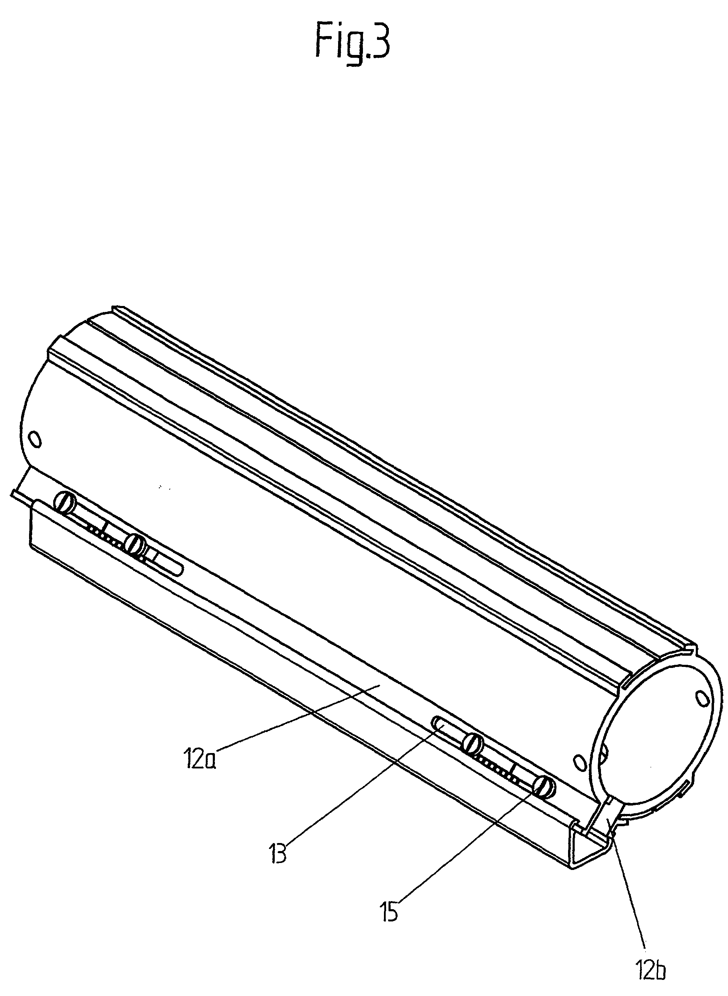

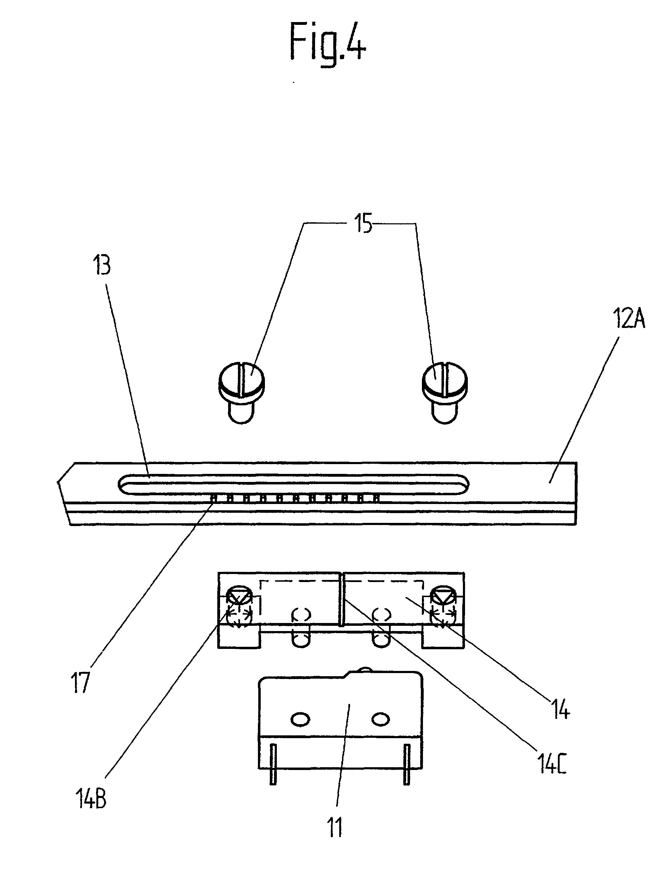

As can be seen in particular from Figures 3 and 4, these means are basically formed by a slot 13 in the side wall 12a of the channel 12, a retaining element 14 and a locking and adjusting screw 15.

The limit switch 11 is retained in a suitable manner on the retaining element 14, and the unit formed thereby consisting of the retaining element 14 and the limit switch 11 is displaceable in the channel 12 with sufficient clearance. In the illustrated embodiment the retaining element 14 is provided with two lugs 14a which engage in corresponding openings in the limit switch 11. The retaining element 14 also has at least one threaded bore 14b into which the locking and fixing screw can be screwed. During the installation, first of all with the cover 12c open the unit formed by the retaining element 14 and the limit switch 11 is pushed into the channel in order then to guide the screw 15 through the slot 13 and screw it into the threaded bore 14b. In this case the threaded part of the locking and fixing screw 15 is slightly smaller in diameter than the width of the slot 3, whilst the head of the locking and fixing screw is correspondingly larger, so that the retaining element 14 and thus also the limit switch 11 can be secured against the side wall 12a of the channel 12 by tightening of the locking and fixing screw 15.

On the other hand, by loosening of the locking and fixing screw 15 it is possible to adjust the retaining element 14 together with the limit switch 11 along the slot 13.

In the region of the adjustment path of the limit switch 11 the channel 12 communicates via an opening 16 with the interior of the housing 3. The limit switch has an actuating element 11a which protrudes through this opening 16 into the interior of the housing 4, where it can come into contact with the nut 4 for actuation of the limit switch.

The limit switch is connected by way of electrical leads (not shown) to the motor 1 or to the control device thereof, the actuation of the limit switch 11 by the nut 4 causing stopping of the rotary movement of the spindle and thus stopping of the movement of the nut. The electrical connecting leads are accommodated in the channel 11 and protected from external influences. As can be seen in particular from Figure 2, each limit switch 11 protrudes with its appertaining actuating element 11a into the interior of the housing by way of separate openings 16.

Thus the user can adjust the two limit switches individually to his requirements. In order to simplify the adjustment, markings 17 can be provided in the region of the slot 13 to co-operate with an adjustment mark 14c on the retaining element 14 or directly with the locking and fixing screw 15.

In a preferred embodiment the housing 3 is constructed in one part and integrally with at least a part of the channel, particularly the side walls thereof. Moreover, it is also advantageous for the flange-like projections provided in the region of the slots 9 also to be produced integrally with the housing 3 in order to form the grooves provided for the dust cover.

## Claims

1. Drive for the adjustment of elements, particularly for the adjustment of seats and beds, with
- a stationary spindle (2) which is rotatable by way of a motor (1),
- a housing (3) which surrounds the spindle,
- a nut (4) which is disposed on the spindle inside the housing and is adjustable in the longitudinal direction of the spindle by the rotary movement of the spindle,
- first fixing means (5) which are stationary relative to the housing,
- second fixing means (6) which are coupled to the nut (4), the spacing between the two fixing means being variable by the rotary movement of the spindle for the adjustment of elements,
- limit switches (11) which are disposed in the region of the housing (3) and co-operate with the nut (4), the limit switches have means for their adjustment in the longitudinal direction of the spindle and these means are capable of being actuated from outside the housing (3),
- and a separate channel which extends parallel to the spindle and is substantially delimited by two walls (12a, 12b), a part of the outside of the housing (3) and a cover (12c), wherein the limit switches are accommodated in said channel (12)
**characterised in that** said two side walls of said channel are constructed integrally with the housing (3).

2. Drive as claimed in Claim 1, **characterised in that** the means for adjustment of the limit switches (11) have locking means (15) in order to fix the limit switch in a desired position.

3. Drive as claimed in Claim 1, **characterised in that** the means for adjustment of the limit switches (11) have a locking stop screw (15) in order to fix the limit switch in a desired position.

4. Drive as claimed in Claim 1, **characterised in that** the channel communicates via an opening (16) with the interior of the housing (3) and the part of the limit switch (11) which comes into contact with the nut protrudes through the opening (16) into the interior of the housing (3).

5. Drive as claimed in Claim 1, **characterised in that** the housing (3) is constructed in one piece and has at least one slot (9) through which connecting means (10) are guided which are connected with one end to the nut (4) and with the other end to the second fixing means (6).

6. Drive as claimed in Claim 1, **characterised in that** the channel has a slot (13) for each of the limit switches (11) and the limit switches can be moved and locked via the adjustment slot.

7. Drive as claimed in Claim 1, **characterised in that** each limit switch (11) is retained on a retaining element (14), the limit switch and retaining element being movably guided in said channel.

## Patentansprüche

1. Antrieb zur Einstellung von Elementen, insbesondere zur Einstellung von Sitzen und Betten, mit
- einer stationären Spindel (2), die mittels eines Motors (1) drehbar ist,
- einem Gehäuse (3), das die Spindel umgibt,
- einer Mutter (4), die an der Spindel innerhalb des Gehäuses angeordnet ist und die in der Längsrichtung der Spindel durch die Drehbewegung der Spindel einstellbar ist,
- ersten Befestigungsmitteln (5), die bezüglich des Gehäuses stationär sind,
- zweiten Befestigungsmitteln (6), die mit der Mutter (4) verbunden sind, wobei der Abstand zwischen den beiden Befestigungsmitteln durch die Drehbewegung der Spindel zur Einstellung der Elemente variabel ist,
- Grenzschalter (11), die im Bereich des Gehäuses (3) angeordnet sind und mit der Mutter (4) zusammenwirken, wobei die Grenzschalter Mittel zu deren Einstellung in der Längsrichtung der Spindel aufweisen und diese Mittel in der Lage sind, von der Außenseite des Gehäuses (3) aus betätigt zu werden,
- und einen separaten Kanal, der sich parallel zur Spindel erstreckt und im Wesentlichen durch zwei Seitenwände (12a, 12b), einem Teil des Gehäuses (3) und eine Abdeckung (12c) abgegrenzt wird, wobei die Grenzschalter in diesem Kanal (12) untergebracht sind,
**dadurch gekennzeichnet, dass** die beiden Seitenwände des Kanals einstückig mit dem Gehäuse (3) aufgebaut sind.

2. Antrieb nach Anspruch 1, **dadurch gekennzeichnet, dass** die Mittel zur Einstellung der Grenzschalter (11) Arretiermittel (15) aufweisen, um die Grenzschalter in einer gewünschten Stellung zu befestigen.

3. Antrieb nach Anspruch 1, **dadurch gekennzeichnet, dass** die Mittel zur Einstellung der Grenzschalter (11) Arretierschrauben (15) aufweisen, um die Grenzschalter in einer gewünschten Stellung zu befestigen.

4. Antrieb nach Anspruch 1, **dadurch gekennzeichnet, dass** der Kanal über eine Öffnung (16) mit dem Inneren des Gehäuses (3) in Verbindung steht und der Teil des Grenzschalters (11), der mit der Mutter in Kontakt kommt, durch die Öffnung (16) in das Innere des Gehäuses (3) hinein ragt.

5. Antrieb nach Anspruch 1, **dadurch gekennzeichnet, dass** das Gehäuse (3) aus einem Stück aufgebaut ist und wenigstens einen Schlitz (9) besitzt, durch den Verbindungsmittel (10) geführt werden, die mit einem Ende mit der Mutter (4) und mit dem anderen Ende mit dem zweiten Befestigungsmittel (6) verbunden ist.

6. Antrieb nach Anspruch 1, **dadurch gekennzeichnet, dass** der Kanal einen Schlitz (13) für jeden der Grenzschalter (11) aufweist und die Grenzschalter über den Einstellschlitz bewegt und arretiert werden können.

7. Antrieb nach Anspruch 1, **dadurch gekennzeichnet, dass** jeder Grenzschalter (11) an einem Halteelement (14) gehalten wird, wobei der Grenzschalter und das Halteelement beweglich im Kanal geführt werden.

## Revendications

1. Dispositif de réglage d'éléments, notamment pour le réglage de sièges et de lits, comportant
- une tige fixe (2), entraînée en rotation par un moteur (1),
- un logement (3), qui entoure la tige,
- un écrou (4) placé sur la tige à l'intérieur du logement, qui est réglable selon la direction longitudinale de la tige grâce à la rotation de la tige,
- des premiers moyens de fixation (5), stationnaires par rapport au logement,
- des deuxièmes moyens de fixation (6) accouplés à l'écrou (4), la distance entre les deux moyens de fixation pouvant être variée par la rotation de la tige pour le réglage des éléments,
- des interrupteurs de fin de course (11) prévus dans la zone du logement (3) et coopérant avec l'écrou (4), lesdits interrupteurs de fin de course présentant des moyens de réglage selon la direction longitudinale de la tige et ces moyens étant capable d'être actionnés de l'extérieur du logement (3),
- et une gorge qui s'étend parallèlement à la tige et est essentiellement délimitée par deux parois (12a, 12b), une partie de l'extérieur du logement (3) et une couverture (12c), les interrupteurs de fin de course étant logés dans ladite gorge (12)
**caractérisé en ce que** les deux parois latérales de ladite gorge sont construites d'une seule pièce avec le logement (3).

2. Dispositif selon la revendication 1, **caractérisé en ce que** les moyens de réglage des interrupteurs de fin de course (11) comportent des moyens de blocage (15), aptes à bloquer l'interrupteur de fin de course dans une position désirée.

3. Dispositif selon la revendication 1, **caractérisé en ce que** les moyens de réglage des interrupteurs de fin de course (11) comportent une vis d'arrêt (15), apte à bloquer l'interrupteur de fin de course dans une position désirée.

4. Dispositif selon la revendication 1, **caractérisé en ce que** la gorge communique par une ouverture (16) avec l'intérieur du logement (3) et la partie de l'interrupteur de fin de course (11) qui entre en contact avec l'écrou fait saillie à travers l'ouverture (16) à l'intérieur du logement (3).

5. Dispositif selon la revendication 1, **caractérisé en ce que** le logement (3) est fabriqué d'une seule pièce et comporte au moins une fente (9), à travers laquelle des moyens de raccord (10) sont guidés, ces moyens étant reliés d'un côté à l'écrou (4) et de l'autre côté aux deuxièmes moyens de fixation (6).

6. Dispositif selon la revendication 1, **caractérisé en ce que** ladite gorge comporte une fente (13) pour chaque interrupteur de fin de course (11) et les interrupteurs de fin de course peuvent être déplacés et bloqués au moyen de la fente de réglage.

7. Dispositif selon la revendication 1, **caractérisé en ce que** chaque interrupteur de fin de course (11) est retenu par un élément de retenue (14), l'interrupteur de fin de course et l'élément de retenue étant guidés de manière mobile à l'intérieur de ladite gorge.
